# EUROPEAN PATENT SPECIFICATION

(11) **EP 4 587 748 B1**
(45) Date of publication and mention of the grant of the patent: **21.01.2026**
(21) Application number: 23757312.6
(22) Date of filing: 24.08.2023
(51) Int. Cl.: F21S 4/28, F21V 5/00, G02B 6/00, F21V 8/00, F21Y 103/10, F21Y 115/10

(54) **OPTICAL ELEMENT FOR A LIGHTING SYSTEM PROVIDING INCREASED LUMINANCE UNIFORMITY**
OPTISCHES ELEMENT FÜR EIN BELEUCHTUNGSSYSTEM MIT ERHÖHTER LUMINANZGLEICHFÖRMIGKEIT
ÉLÉMENT OPTIQUE POUR UN SYSTÈME D'ÉCLAIRAGE FOURNISSANT UNE UNIFORMITÉ DE LUMINANCE ACCRUE

(30) Priority: 12.09.2022 EP 22195036; 15.09.2022 EP 22195858
(43) Date of publication of application: 23.07.2025
(73) Proprietor: Signify Holding B.V., 5656 AE Eindhoven (NL)
(72) Inventor: ZAREMBA, Krzysztof, Cezary, 5656 AE Eindhoven (NL)
(74) Representative: Verweij, Petronella Daniëlle
(86) International application number: PCT/EP2023/073265
(87) International publication number: WO 2024/056341

(56) References cited:
- EP-A1- 3 015 761
- EP-A1- 3 267 094
- WO-A1-2021/130793
- DE-A1- 102013 226 181
- DE-A1- 102014 222 169
- DE-U1- 202014 104 797
- DE-U1- 202016 002 197

## Description

### FIELD OF THE INVENTION

The present invention relates to an optical element for a lighting system, a lighting system comprising such an optical element and to a lighting device comprising such a lighting system.

### BACKGROUND OF THE INVENTION

There are strongly opposing requirements in office luminaires. Especially, office compliance luminaires require limited light distribution with UGR≤19.0 and low diffusive light at angles above 65 degrees (L65≤3000 cd/m²). On the other hand, customers prefer office luminaires with maximal luminance uniformity, meaning that the cover should be as diffusive as possible.

All these above-mentioned requirements can be met by currently available optical systems consisting of MLO cover and diffusive foil (e.g., FlexBlend MLO) or diffusive reflector (e.g., SmartBalance). However, such solutions are costly (expensive MLO cut from sheet must be fixed using additional elements) and of low efficiency, especially in luminaires having small exit windows (e.g., FlexBlend MLO - LOR=65%).

There are more cost-efficient luminaires, such as KeyLine PCS or FlexBlend PCS, wherein PCS cover, i.e. a hexagonal structure with spheres radius of 2.3mm is used together with lenses inside the luminaire. Both the cover and the lenses are moulded, thus being cost-efficient and easy to assemble. Such optical system is efficient (80-86%) and meet office compliance requirements but has a highly non-uniform luminance of the exit window.

Considering the above, there is a need to provide an improved track lighting system exhibiting a uniform luminance while being cost-efficient and easy to assemble.

DE202016002197U1 discloses a direct-emitting LED lamp with anti-glare effect.

### SUMMARY OF THE INVENTION

It is an object of the present invention to overcome or at least alleviate the above-mentioned problems, and to provide an improved lighting system.

To this end, the present invention provides an elongated optical element for a lighting system having a longitudinal extension and width as a transverse extension being substantially perpendicular to the longitudinal extension. The longitudinal extension of the optical element depends on the intended use and may be from 1 cm to 100 m. The transverse extension of the optical element may be from 5 mm cm to 30 cm. The optical element according to the present invention may be a diffuser. The term "substantially" as used in the context of the present description is intended to mean "coinciding or slightly deviating".

The optical element of the present invention further comprises a central portion having a first edge and a second edge being arranged substantially parallel to each other and to the longitudinal extension of the optical element. The transverse extension of the central portion of the optical element may be from 10% to 90% of the transverse extension of the optical element. The central portion of the optical element is arranged to be positioned such that it covers the light sources of the track lighting system.

The optical element according to the present invention further comprises at least a first lightguide arranged at the first edge of the central portion. The first lightguide may be aligned in the transverse direction with the light source of the track lighting system. The first lightguide may be attached to the first edge of the central portion by means of a fastening element, such as adhesive, a clamp, a screw, or the like. Alternatively, the first lightguide may be an integral portion of the optical element, i.e. the first lightguide and the central portion may be manufactured as one single piece. **In** particular, the first lightguide and the central portion may be molded together from one tool, in one process step. **In** such an embodiment, the first lightguide and the central portion are manufactured of the same material.

The optical element according to the present invention has a first surface facing at least one light source of the track lighting system, and a second surface being opposite to the first surface. The first surface of the first lightguide comprises at least one longitudinal jag being substantially parallel to the longitudinal extension of the optical element. Said optical element further comprises a plurality of first lightguides spaced apart along said first edge of said central portion.

The essence of the present invention is thus providing an additional apparent light source such that the beam of light emitted from the light source is reflected by the longitudinal jag thus improving luminance uniformity by enlightening the dark portions of the light pattern that otherwise may be formed.

The optical element may further comprise a second lightguide arranged on the second edge of the central portion. Such an embodiment offers the advantage of symmetrical light pattern. The second lightguide may be aligned in the transverse direction with the light source of the lighting system and/or with the first lightguide. The second lightguide may be attached to the second edge of the central portion by means of adhesive or by any other suitable means. Alternatively, the second lightguide may be an integral portion of the optical element, i.e. the second lightguide and the central portion may be manufactured as one single piece.

In non-claimed embodiments, the first and/or the second lightguide may be continuous and may have a longitudinal extension being substantially equal in length to the length of the longitudinal extension of the optical element. In other words, the first and/or the second lightguide may run along the entire first and/or second edge of the central portion, respectively.

The invention will be discussed essentially only with respect to a track lighting system, but as such is suitable for use in other types of (linear) lighting systems that comprises elongated optical elements, for example TLEDs.

As stated above, the optical element comprises a plurality of first lightguides spaced apart along the first edge of the central portion. Thus the amount of light guided in the longitudinal direction of the optical element is minimized and thus enhances the possibilities of fulfilling higher requirements of office compliance parameters (such as UGR, L65) into the longitudinal direction. When a plurality of first lightguides is present, each first lightguide may be aligned in the transverse direction with a light source of the lighting system. Analogously, the optical element may comprise a plurality of second lightguides spaced apart along the second edge of the central portion. When a plurality of second lightguides is present, each second lightguide may be aligned in the transverse direction with a light source of the lighting system. Further, each second lightguide may be aligned with a first lightguide.

The second lightguide may comprise a longitudinal jag arranged on the first surface of the second lightguide. The longitudinal extension of the jag may be substantially equal in length to the length of the longitudinal extension of the first and/or the second lightguide.

The longitudinal jag provided on the first surface of the first and/or the second lightguide may be in the form of a groove. The depth of the groove may be adapted to the intended use but should be sufficient to allow reflection of the light emitted by the light source.

Alternatively, the longitudinal jag may be formed between a riser portion and a tread portion of a step. In such an embodiment, the beam of light is reflected by the riser portion.

The elongated optical element according to the present invention may comprise at least one lens plate being arranged along the central portion of the optical element. The lens plate is arranged to cover the light source of the lighting system. Preferably, the number of lens plates is equal to the number of light sources.

The optical element may comprise at least one collimator arranged adjacent to the at least one lens plate at the first surface of the optical element in the central portion thereof. Such an embodiment offers the advantage of providing parallel beams of light through the lightguides, thus improving control of the beams once they reach the edge of the lightguide and/or the longitudinal jag.

The angle between the first and/or the second lightguide and the central portion of the optical element may be from 90° to 180°.

The present invention refers to a lighting system, for example a track lighting system, comprising a (track) substrate having a longitudinal extension, a first edge and a second edge running substantially parallel to the longitudinal extension and spaced apart in a transverse direction being substantially perpendicular to the longitudinal extension. The substrate has a first width W1 between the first edge and the second edge. In other words, the substrate may be in the form of an elongated strip of material. The substrate may be flexible or rigid. The substrate may be made of any suitable material, such as polymethylmethacrylate (PMMA) or polycarbonate (PC). The length and width W1 of the substrate may be adapted to the desired use of the lighting system. Normally, the length of the substate is considerably greater than the width W1 of the substrate. For instance, the length of the substrate may be from 5 cm to 5 m. The width W1 of the substrate may be from 1 cm to 10 cm.

The lighting system further comprises at least one printed circuit board (PCB) arranged on the substrate and comprising at least one light source. The at least one PCB has a second width W2 in a direction being substantially perpendicular to the longitudinal extension (L) of the substrate. By the term "arranged on" is understood as the substrate and the PCB being arranged in direct or indirect contact with each other. In other words, the PCB may be immediately adjacent to the substrate. Alternatively, an additional layer may be present between the substrate and the PCB, e.g. in the form of a thin plastic sheet with high reflectivity. The first width W1 may be greater than the second width W2. In other words, there may be a portion of the substrate being free from the PCB. In particular, W2 may be lower than 100 mm, preferably lower than 60 mm, more preferably lower than 40 mm.

The PCB may be arranged symmetrically relative the central longitudinal axis of the substrate, such that the distance between the first edge portion and the PCB is equal to the distance between the second edge portion and the PCB. Alternatively, the PCB may be arranged asymmetrically relative the central longitudinal axis of the substrate. The lighting system may comprise one PCB having a length being substantially equal to the length of the substrate. Alternatively, the lighting system may have a plurality of PCB arranged along the longitudinal extension of the substrate. In such an embodiment, the length of each of the PCBs is shorter than the length of the substrate.

The lighting system according to the present invention may comprise a plurality of light sources. In such an embodiment, each light source of the plurality of light sources may be covered by a common lens plate or by an individual lens plate. Normally, a lens plate has length of 280 mm (1 ft) and covers 20-24 LEDs. Alternatively, the number of light sources in the plurality of light sources is equal to the number of lens plates in the plurality of lens plates.

The plurality of light sources and the plurality of lens plates may be arranged in a linear array. The array may be a rectilinear (straight) array. In another embodiment, the linear array is curved in a plane perpendicular to the optical axes of the lens plates.

The lighting system comprises an optical element as described above. The optical element is arranged downstream from the at least one light source. Finally, the lighting system further comprises a cover arranged downstream from the optical element. The term "downstream" is in the context of the present invention intended to mean in a consecutive order in the direction of the light path. Finally, the lighting system comprises a cover arranged downstream from the at least one diffuser. The cover may be an optical cover which may be made of polycarbonate (PC). The cover may be clear or diffusive. Further, the cover may be flat or may comprise an optical structure in order to provide a proper light distribution and improve uniformity of the light exit window, such that the light exit window is perceived to be uniformly lit.

The optical element may have a width Wo in the transverse extension. In particular, the width Wo of the optical element may be greater than the second width W2 of the PCB. Such an embodiment offers the advantage of an improved luminance uniformity.

Finally, the present invention relates to a lighting device comprising a lighting system as described above. The lighting system may be a track lighting system. The lighting device may be a track lighting device comprising a track lighting system, a (track) luminaire, in particular an office (track) luminaire.

### BRIEF DESCRIPTION OF THE DRAWINGS

These and other aspects of the present invention will now be described in more detail, with reference to the appended drawings showing embodiment(s) of the invention.
Figs. 1a and 1b depict a perspective view of the optical element according to a non-claimed embodiment;
Fig. 2a illustrates a cross-section of the optical element shown in Figs. 1a and 1b and Figs. 4a-c;
Figs. 2b shows a cross-section of an optical element according to an embodiment of the present invention;
Figs. 3a and 3b depict a luminance pattern provided by a track lighting system according to the present invention;
Figs. 4a-4c illustrate a perspective view of the optical element according to another embodiment of the present invention:
Fig. 5 depicts a luminance pattern provided by the optical element shown in Figs. 4a-4c;
Fig. 6a illustrates the luminance pattern provided by the track lighting system according to the prior art, i.e. without any optical element, and
Fig. 6b respectively illustrates the luminance pattern provided by the track lighting system with optical element according to the present invention.

Similar reference numerals refer to similar elements throughout.

### DETAILED DESCRIPTION

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person. In the drawings the invention mainly will be discussed at the hand of track lighting devices, but should be considered as to generally apply to other (linear) lighting devices comprising at least one elongated optical element.

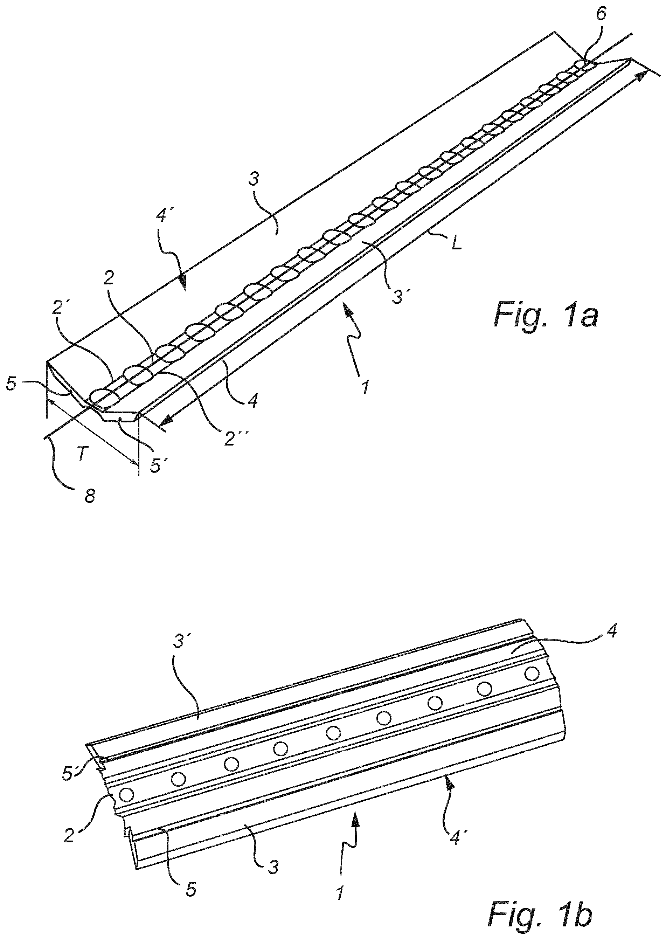

Figs. 1a and 1b depict a top view and a bottom view of the elongated optical element 1, respectively, of a non-claimed embodiment.

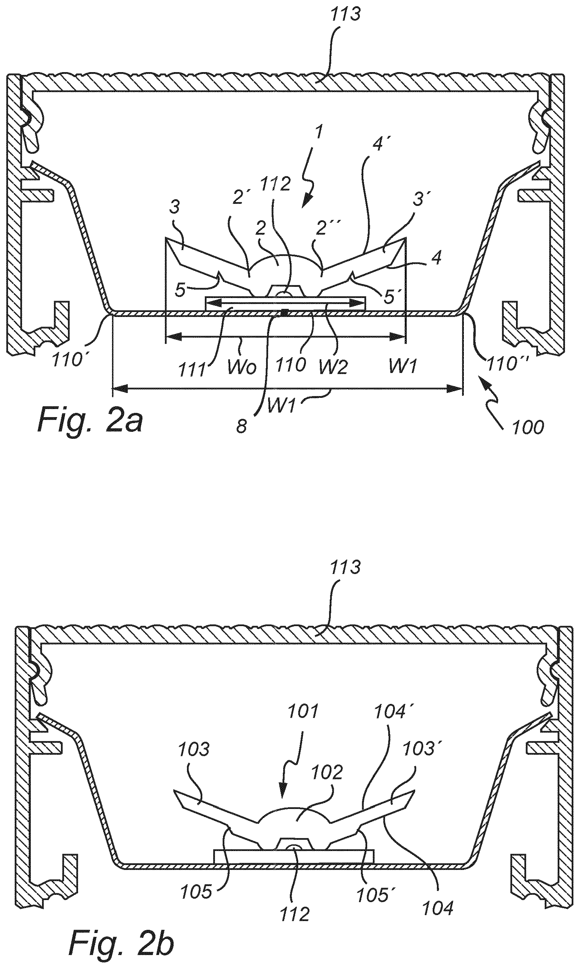

The elongated optical element 1 has a longitudinal extension L and a transverse extension T being substantially perpendicular to the longitudinal extension L. The optical element 1 shown in Figs. 1a and 1b further comprises a central portion 2 having a first edge 2' and a second edge 2" being arranged substantially parallel to each other and to the longitudinal extension L of the optical element 1. The central portion 2 of the optical element 1 is arranged to be positioned such that it covers the light sources of the lighting system 100, as may be seen in Fig. 2a.

The optical element further comprises a first lightguide 3 arranged at the first edge 2' of the central portion 2 and a second light guide 3' at the second edge 2" of the central portion 2. The first and second lightguide 3, 3' may be aligned in the transverse direction T with the light source of the lighting system. The first and second lightguide 3, 3' are an integral portion of the optical element 1, i.e. the first and second lightguide 3, 3' and the central portion 2 are manufactured as one single piece.

The optical element 1 shown in Fig. 1a has a first surface 4 facing at least one light source of the lighting system 100, and a second surface 4' being opposite to the first surface 4. The first surface 4 of the first lightguide 3 comprises a longitudinal jag 5 being substantially parallel to the longitudinal extension L of the optical element 1. The second surface 4' of the second lightguide 3' comprises a longitudinal jag 5' being substantially parallel to the longitudinal extension L of the optical element 1. The longitudinal jags 5, 5' depicted in Figs. 1a, 1b and 2a are in the form of a groove.

The lighting system 100 comprising a substrate 110 having a longitudinal extension, a first edge 110' and a second edge 110" running substantially parallel to the longitudinal extension and spaced apart in a transverse direction being substantially perpendicular to the longitudinal extension. The substrate 110 has a first width W1 between the first edge 110' and the second edge 110". In other words, the substrate 110 is in the form of an elongated strip of material.

The lighting system further comprises at least one PCB 111 arranged on the substrate 110 and comprising at least one light source 112. The at least one PCB 111 has a second width W2 in a direction being substantially perpendicular to the longitudinal extension (L) of the substrate 110. The first width W1 is greater than the second width W2.

The PCB 111 is arranged symmetrically relative the central longitudinal axis 8 of the substrate 110, such that the distance between the first edge portion 110' and the PCB is equal to the distance between the second edge portion 110" and the PCB.

The optical element 1 has a width Wo in the transverse extension. As may be seen in Fig. 2a, the width Wo of the optical element 1 is greater than the second width W2 of the PCB 111. A cover 113 is arranged downstream from said optical element 1.

The essence of the disclosure is thus providing an additional apparent light source such that the beam of light emitted from the light source is reflected by the longitudinal jag thus improving luminance uniformity by enlightening the dark portions of the light pattern that otherwise may be formed.

The optical element 1 further comprises a second lightguide 3' arranged on the second edge 2" of the central portion 2. Such an embodiment offers the advantage of symmetrical light pattern. The second lightguide 3' may be aligned in the transverse direction with the light source of the lighting system 100 and/or with the first lightguide 3. The second lightguide 3' may be attached to the second edge 2" of the central portion 2. In analogy with the first lightguide 3, the second lightguide 3' may be an integral portion of the optical element 1, i.e. the second lightguide 3' and the central portion 2 may be manufactured as one single piece.

The first and the second lightguide 3, 3' depicted in Figs. 1a and 1b are non-claimed embodiments which are continuous and have a longitudinal extension being substantially equal in length to the length of the longitudinal extension of the optical element 1. In other words, the first and the second lightguides 3, 3' run along the entire first and second edge 2', 2" of the central portion 2, respectively.

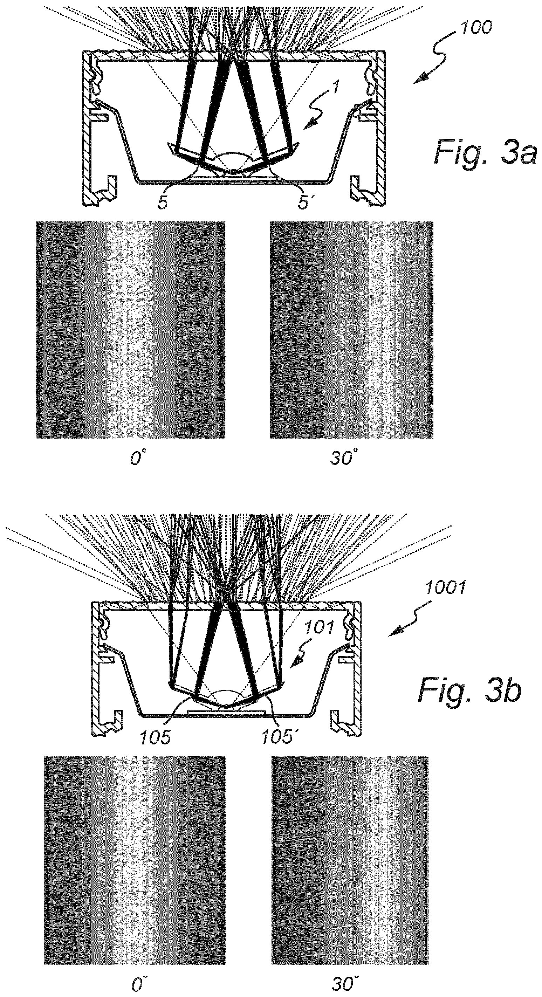

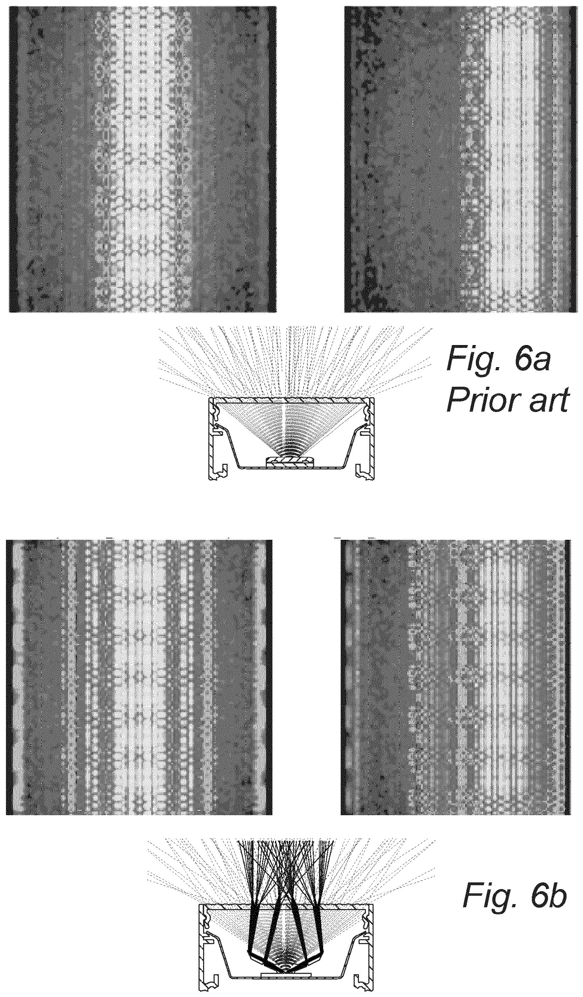

Fig. 3a depicts the luminance pattem of the track lighting system 100 with viewing angle of 0° to the left and 30° to the right, respectively, as obtained by the embodiment shown in Fig. 2a. As is visible, the luminance pattern is improved as compared to the luminance pattern provided by the track lighting system according to the prior art shown in Fig. 6a.

Fig. 2b illustrates a cross-section of the optical element 101 according to an embodiment of the present invention. Optical element 101 includes longitudinal jags 105, 105' in the form of a step and provided at the first surface 104 (opposite the second surface 104') of the plurality of first 103 and second lightguides 103' which are connected to the central portion 102. Fig. 3b depicts the luminance pattern of the track lighting system 1001 comprising the optical element 101 with viewing angle of 0° to the left and 30° to the right, respectively, as obtained by the embodiment shown in Fig. 2b.

As described above, the optical element 201 comprises a plurality of first lightguides 203 spaced apart along the first edge 202' of the central portion 202. Such an embodiment minimizes the amount of light guided in the longitudinal direction of the optical element 201. When a plurality of first lightguides 203 is present, each first lightguide 203 may be aligned in the transverse direction with a light source of the track lighting system 2001. The optical element 201 further comprises a plurality of second lightguides 203' spaced apart along the second edge 202" of the central portion 202. When a plurality of second lightguides 203' is present, each second lightguide 203' is aligned in the transverse direction with a light source of the track lighting system 2001. Further, each second lightguide 203' is aligned with a first lightguide 203.

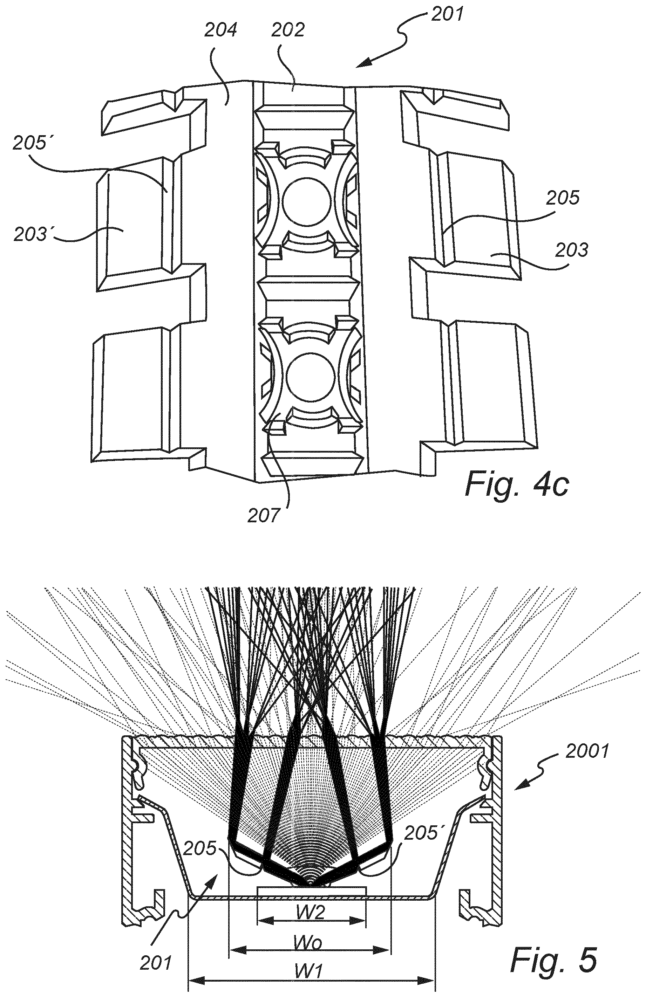

Each of the first lightguides 203 and each of the second lightguides 203' comprises a longitudinal jag 205, 205' arranged on the first surface 204. The longitudinal extension of the jag 205, 205' is substantially equal in length to the length of the longitudinal extension of the first and the second lightguide 203, 203'. The longitudinal jag 205, 205' provided on the first surface 204 of the first and the second lightguides 203, 203' is in the form of a groove. The depth of the groove 205, 205' should be sufficient to allow reflection of the light emitted by the light source, as shown in Fig. 5.

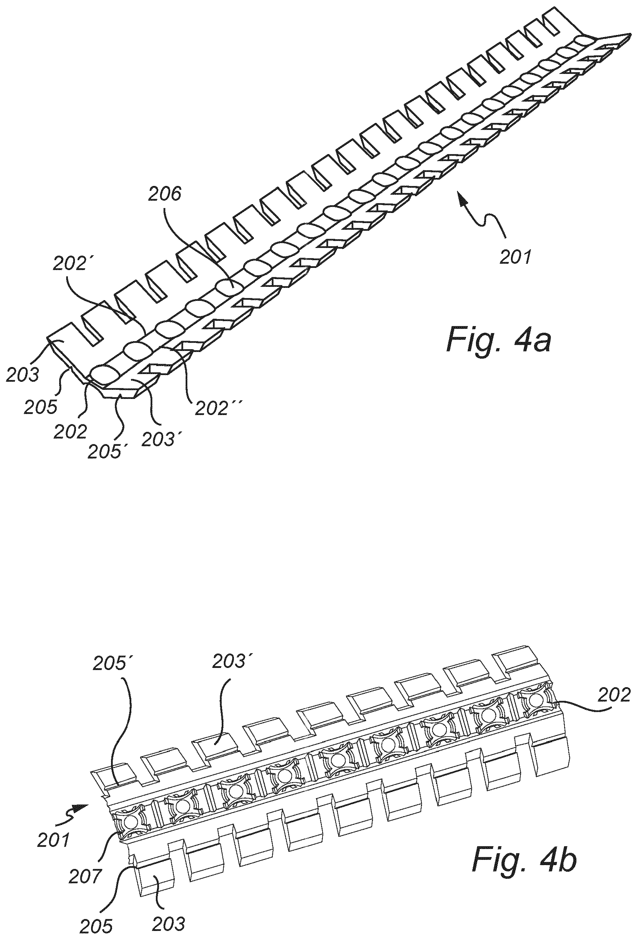

As shown in Fig. 4a, the elongated optical element according to the present invention comprises a plurality of lens plates 206 being arranged along the central portion 202 of the optical element 201. The lens plates 206 are arranged to cover the light source of the track lighting system 2001. Preferably, the number of lens plates 206 is equal to the number of light sources.

The optical element 201 comprise a plurality of collimators 207 arranged adjacent to the lens plates 206 at the first surface 204 of the optical element 201 in the central portion 202 thereof, as shown in Fig. 4b, Fig. 4c shows a detailed view of Fig. 4b. Fig. 5 and 6b depicts the luminance pattern provided by the track lighting system shown in Figs. 4a-4b. As is evident from these figures, the luminance pattern is improved as compared to the luminance pattem shown in Fig. 6a provided by the track lighting system of the prior art.

The person skilled in the art realizes that the present invention by no means is limited to the preferred embodiments described above. Additionally, variations to the disclosed embodiments can be understood and effected by the skilled person in practising the claimed invention, as defined in the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. An elongated optical element (1) for a lighting system (100) having a longitudinal extension (L) and a width (Wo) as transverse extension (T) being substantially perpendicular to said longitudinal extension, said optical element (1) having a central portion (2) having a first edge (2') and a second edge (2") being arranged substantially parallel to each other and to said longitudinal extension of said optical element (1), said optical element (1) further comprising at least a first lightguide (3) arranged at said first edge (2') of said central portion (2), said optical element (1) having a first surface (4) facing at least one light source (112) of said lighting system (100), and a second surface (4') being opposite to said first surface (4), wherein said first surface (4) of said first lightguide (3) comprises at least one longitudinal jag (5) being substantially parallel to said longitudinal extension of said optical element (1), **characterised in that** said optical element (1, 201) comprises a plurality of first lightguides (203) spaced apart along said first edge (202') of said central portion (202).

2. The elongated optical element (1) according to claim 1, wherein said optical element (1) further comprises a second lightguide (3') arranged on said second edge (2") of said central portion (2).

3. The elongated optical element (1) according to claim 2, wherein said second lightguide (3') comprises a longitudinal jag (5') arranged on said first surface (4) of said second lightguide (3').

4. The elongated optical element (1) according to any one of the preceding claims, wherein said jag (5) is in the form of a groove.

5. The elongated optical element (101) according to any one of claims 1-3, wherein said jag (105) is formed between a riser portion and a tread portion of a step.

6. The elongated optical element (1) according to any one of the preceding claims, wherein the longitudinal extension of said jag (5) is substantially equal in length to the length of said longitudinal extension of said optical element (1).

7. The elongated optical element (1) according to any one of the preceding claims, wherein said optical element (1) comprises at least one lens plate (6) being arranged along said central portion (2) of said optical element (1).

8. The elongated optical element (201) according to claim 7, wherein said optical element (201) comprises at least one collimator (207) arranged adjacent to said at least one lens plate (206) at said first surface (204) of said optical element (201) in said central portion (202) thereof.

9. The elongated optical element (1) according to any one of the preceding claims, wherein said optical element (1) is a diffuser.

10. The elongated optical element (1) according to any one of the preceding claims, wherein the angle between said first and/or said second lightguide (3, 3') and said central portion (2) of said optical element (1) is from 90° to 180°.

11. A lighting system (100) comprising:
a substrate (110) having a longitudinal extension (L), a first edge (110') and a second edge (110") running substantially parallel to said longitudinal extension (L) and spaced apart in a transverse direction being substantially perpendicular to said longitudinal extension (L), said substrate (110) having a first width W1 between said first edge (110') and said second edge (110");
at least one printed circuit board (PCB, 111) arranged on said substrate (110) and comprising at least one light source (112); said at least one PCB (111) having a second width W2 in a direction being substantially perpendicular to said longitudinal extension (L) of said substrate (110),
an optical element (1) according to any one of claims 1-10 being arranged downstream from said at least one light source (112);
a cover (113) arranged downstream from said optical element (1).

12. The lighting system (100) according to claim 11, wherein the lighting system is a track lighting system.

13. A lighting device comprising a lighting system (100) according to any one of claims 11-12.

## Patentansprüche

1. Längliches optisches Element (1) für ein Beleuchtungssystem (100), das eine Längserstreckung (L) und eine Breite (Wo) als Quererstreckung (T) aufweist, die im Wesentlichen senkrecht zu der Längserstreckung ist, wobei das optische Element (1) einen zentralen Abschnitt (2) mit einer ersten Kante (2') und einer zweiten Kante (2") aufweist, die im Wesentlichen parallel zueinander und zu der Längserstreckung des optischen Elements (1) angeordnet sind, wobei das optische Element (1) ferner mindestens einen ersten Lichtwellenleiter (3) umfasst, der an der ersten Kante (2') des zentralen Abschnitts (2) angeordnet ist, wobei das optische Element (1) eine erste Oberfläche (4), die mindestens einer Lichtquelle (112) des Beleuchtungssystems (100) zugewandt ist, und eine zweite Oberfläche (4') aufweist, die der ersten Oberfläche (4) gegenüberliegt, wobei die erste Oberfläche (4) des ersten Lichtwellenleiters (3) mindestens eine Längszacke (5) umfasst, die im Wesentlichen parallel zu der Längserstreckung des optischen Elements (1) ist,
**dadurch gekennzeichnet, dass**
das optische Element (1, 201) eine Vielzahl von ersten Lichtwellenleitern (203) umfasst, die entlang der ersten Kante (202') des zentralen Abschnitts (202) beabstandet sind.

2. Längliches optisches Element (1) nach Anspruch 1, wobei das optische Element (1) ferner einen zweiten Lichtwellenleiter (3') umfasst, der an der zweiten Kante (2") des zentralen Abschnitts (2) angeordnet ist.

3. Längliches optisches Element (1) nach Anspruch 2, wobei der zweite Lichtwellenleiter (3') eine Längszacke (5') umfasst, die auf der ersten Oberfläche (4) des zweiten Lichtwellenleiters (3') angeordnet ist.

4. Längliches optisches Element (1) nach einem der vorstehenden Ansprüche, wobei die Zacke (5) die Form einer Rille hat.

5. Längliches optisches Element (101) nach einem der Ansprüche 1 bis 3, wobei die Zacke (105) zwischen einem Setzabschnitt und einem Trittabschnitt einer Stufe ausgebildet ist.

6. Längliches optisches Element (1) nach einem der vorstehenden Ansprüche, wobei die Längserstreckung der Zacke (5) im Wesentlichen gleich der Länge der Längserstreckung des optischen Elements (1) ist.

7. Längliches optisches Element (1) nach einem der vorstehenden Ansprüche, wobei das optische Element (1) mindestens eine Linsenplatte (6) umfasst, die entlang des zentralen Abschnitts (2) des optischen Elements (1) angeordnet ist.

8. Längliches optisches Element (201) nach Anspruch 7, wobei das optische Element (201) mindestens einen Kollimator (207) umfasst, der neben der mindestens einen Linsenplatte (206) an der ersten Oberfläche (204) des optischen Elements (201) in dessen zentralem Abschnitt (202) angeordnet ist.

9. Längliches optisches Element (1) nach einem der vorstehenden Ansprüche, wobei das optische Element (1) ein Diffusor ist.

10. Längliches optisches Element (1) nach einem der vorstehenden Ansprüche, wobei der Winkel zwischen dem ersten und/oder dem zweiten Lichtwellenleiter (3, 3') und dem zentralen Abschnitt (2) des optischen Elements (1) zwischen 90° und 180° beträgt.

11. Beleuchtungssystem (100), umfassend:
ein Substrat (110), das eine Längserstreckung (L), eine erste Kante (110') und eine zweite Kante (110") aufweist, die im Wesentlichen parallel zu der Längserstreckung (L) verlaufen und in einer Querrichtung beabstandet sind, die im Wesentlichen senkrecht zu der Längserstreckung (L) ist, wobei das Substrat (110) eine erste Breite W1 zwischen der ersten Kante (110') und der zweiten Kante (110") aufweist;
mindestens eine Leiterplatte (PCB, 111), die auf dem Substrat (110) angeordnet ist und mindestens eine Lichtquelle (112) umfasst; wobei das mindestens eine PCB (111) eine zweite Breite W2 in einer Richtung aufweist, die im Wesentlichen senkrecht zu der Längserstreckung (L) des Substrats (110) ist,
ein optisches Element (1) nach einem der Ansprüche 1 bis 10, das stromabwärtig von der mindestens einen Lichtquelle (112) angeordnet ist;
eine Abdeckung (113), die stromabwärtig von dem optischen Element (1) angeordnet ist.

12. Beleuchtungssystem (100) nach Anspruch 11, wobei das Beleuchtungssystem ein Schienenbeleuchtungssystem ist.

13. Beleuchtungsvorrichtung, umfassend ein Beleuchtungssystem (100) nach einem der Ansprüche 11 bis 12.

## Revendications

1. Élément optique allongé (1) pour un système d'éclairage (100) présentant une extension longitudinale (L) et une largeur (Wo), l'extension transversale (T) étant sensiblement perpendiculaire à ladite extension longitudinale, ledit élément optique (1) présentant une partie centrale (2) avec un premier bord (2') et un second bord (2") disposés sensiblement parallèlement l'un à l'autre et à ladite extension longitudinale dudit élément optique (1), ledit élément optique (1) comprend en outre au moins un premier guide de lumière (3) disposé au niveau dudit premier bord (2') de ladite partie centrale (2), ledit élément optique (1) présentant une première surface (4) orientée vers au moins une source de lumière (112) dudit système d'éclairage (100), et une deuxième surface (4') opposée à ladite première surface (4), dans lequel ladite première surface (4) dudit premier guide de lumière (3) comprend au moins une dent (5) longitudinale sensiblement parallèle à ladite extension longitudinale dudit élément optique (1),
**caractérisé en ce que**
ledit élément optique (1, 201) comprend une pluralité de premiers guides de lumière (203) espacés le long dudit premier bord (202') de ladite partie centrale (202).

2. Élément optique allongé (1) selon la revendication 1, dans lequel ledit élément optique (1) comprend en outre un second guide de lumière (3') disposé sur ledit second bord (2") de ladite partie centrale (2).

3. Élément optique allongé (1) selon la revendication 2, dans lequel ledit second guide de lumière (3') comprend une dent (5') longitudinale disposée sur ladite première surface (4) dudit second guide de lumière (3').

4. Élément optique allongé (1) selon l'une quelconque des revendications précédentes, dans lequel ladite dent (5) se présente sous la forme d'une rainure.

5. Élément optique allongé (101) selon l'une quelconque des revendications 1 à 3, dans lequel le lacet (105) est formé entre une partie de l'élévateur et une partie de la bande de roulement d'une marche.

6. Élément optique allongé (1) selon l'une quelconque des revendications précédentes, dans lequel l'extension longitudinale de ladite dent (5) est sensiblement égale en longueur à la longueur de ladite extension longitudinale dudit élément optique (1).

7. Élément optique allongé (1) selon l'une quelconque des revendications précédentes, dans lequel ledit élément optique (1) comprend au moins une plaque de lentille (6) disposée le long de ladite partie centrale (2) dudit élément optique (1).

8. Élément optique allongé (201) selon la revendication 7, dans lequel ledit élément optique (201) comprend au moins un collimateur (207) disposé à côté de ladite au moins une plaque de lentille (206) sur ladite première surface (204) dudit élément optique (201) dans ladite partie centrale (202) de celui-ci.

9. Élément optique allongé (1) selon l'une quelconque des revendications précédentes, dans lequel ledit élément optique (1) est un diffuseur.

10. Élément optique allongé (1) selon l'une quelconque des revendications précédentes, dans lequel l'angle entre ledit premier et/ou ledit second guide de lumière (3, 3') et ladite partie centrale (2) dudit élément optique (1) est compris entre 90 ° et 180 °.

11. Système d'éclairage (100) comprenant :
un substrat (110) ayant une extension longitudinale (L), un premier bord (110') et un second bord (110") sensiblement parallèles à ladite extension longitudinale (L) et espacés dans une direction transversale sensiblement perpendiculaire à ladite extension longitudinale (L), ledit substrat (110) ayant une première largeur W1 entre ledit premier bord (110') et ledit second bord (110") ;
au moins une carte de circuit imprimé (PCB, 111) disposée sur ledit substrat (110) et comprenant au moins une source lumineuse (112) ; ladite au moins une PCB (111) ayant une seconde largeur W2 dans une direction sensiblement perpendiculaire à ladite extension longitudinale (L) dudit substrat (110),
un élément optique (1) selon l'une quelconque des revendications 1 à 10, étant disposé en aval de ladite au moins une source lumineuse (112) ;
un couvercle (113) disposé en aval dudit élément optique (1).

12. Système d'éclairage (100) selon la revendication 11, dans lequel le système d'éclairage est un système d'éclairage de suivi.

13. Dispositif d'éclairage comprenant un système d'éclairage (100) selon l'une quelconque des revendications 11 à 12.
